# EUROPÄISCHE PATENTSCHRIFT

(11) **EP 0 973 607 B1**
(45) Veröffentlichungstag und Bekanntmachung des Hinweises auf die Patenterteilung: **20.09.2000**
(21) Anmeldenummer: 98922575.0
(22) Anmeldetag: 11.06.1998
(51) Int. Cl.: B01J 19/00, F16L 39/02, B01L 3/00, F28F 9/26, B01L 9/06, B01L 7/00

(54) **VORRICHTUNG ZUR TEMPERIERUNG VON GASEN, FLÜSSIGKEITEN UND/ODER FESTSTOFFEN IN EINEM REAKTIONSGEFÄSS**
DEVICE FOR TEMPERING GASES, LIQUIDS AND/OR SOLIDS IN A REACTION VESSEL
DISPOSITIF POUR TEMPERER DES GAZ, DES LIQUIDES ET/OU DES SOLIDES DANS UNE EPROUVETTE

(30) Priorität: 16.06.1997 CH 146797; 08.11.1997 CH 257797; 15.01.1998 CH 9498
(43) Veröffentlichungstag der Anmeldung: 26.01.2000
(73) Patentinhaber: Chemspeed Ltd., 4302 Augst (CH)
(72) Erfinder: GÜLLER, Rolf, CH-5027 Herznach (CH); MUNCH, Séraphin, F-68170 Rixheim (FR); GEES, Thomas, CH-7416 Almens (CH); TSCHIRKY, Hansjörg, CH-4107 Ettingen (CH); SPREITER, Walter, CH-4132 Muttenz (CH)
(74) Vertreter: Bollhalder, Renato
(86) Internationale Anmeldenummer: CH9800255
(87) Internationale Veröffentlichungsnummer: WO9857740

(56) Entgegenhaltungen:
- WO-A-93/24233
- WO-A-97/09353
- DE-A- 3 900 101
- GB-A- 2 267 844
- US-A- 5 503 805
- PATENT ABSTRACTS OF JAPAN vol. 18, no. 537 (C-1260), 13. Oktober 1994 -& JP 06 190264 A (SHIMADZU CORP.), 12. Juli 1994 -& DATABASE WPI Section Ch, Week 9432 Derwent Publications Ltd., London, GB; Class A89, AN 94-259687 XP002055458 & JP 06 190264 (SHIMADZU CORP.) , 12. Juli 1994

## Beschreibung

Die vorliegende Erfindung bezieht sich auf eine Vorrichtung zur Temperierung von Gasen, Flüssigkeiten und/oder Feststoffen in einem Reaktionsgefäss, wie sie im Oberbegriff des unabhängigen Patentanspruchs 1 definiert ist.

In der chemischen Forschung der Pharmaindustrie und der Universitäten wird es immer wichtiger, möglichst schnell eine grosse Anzahl von potentiellen Wirkstoffen ausfindig zu machen und diese dann zu testen. Ein Teil der chemischen Forschung bezieht sich daher heutzutage auf kombinatorische Chemie, parallele Synthese und Hochgeschwindigkeitschemie. Von zentraler Bedeutung ist hierbei die Möglichkeit, bekannte oder neue chemische Reaktionstypen mit möglichst geringen Anpassungen möglichst breit einsetzen zu können. Dabei ist oft ein breiter Temperaturbereich zur Durchführung entsprechender Reaktionen notwendig, was wiederum den Einsatz eines effizienten Kondensationssystems oberhalb der Reaktionsgefässe notwendig macht.

Es wurden verschiedenartigste Vorrichtungen zur parallelen Durchführung einer Vielzahl von chemischen, biologischen, biochemischen oder physikalischen Verfahren geschaffen, bei denen keine effiziente Kühlung eventuell gebildeter Gase vorhanden ist, eine Zugabe von Feststoffen durch den gewählten Aufbau nicht oder nur sehr beschränkt möglich ist, die zudem entweder nur für spezielle Anwendungen geeignet, zu kompliziert aufgebaut, zu gross oder zu bedienungsunfreundlich sind und/oder mit Hilfe derer die einzelnen Verfahrensschritte nicht genügend automatisiert werden können.

Eine derartige Vorrichtung zur parallelen Durchführung einer Vielzahl von chemischen, biochemischen, biologischen oder physikalischen Verfahren wird unter der Bezeichnung RAM Synthesizer BHD 1524 von der Firma Bohdan Europe, Frankreich, vertrieben. Sie umfasst einen Block, an dem eine Vielzahl von Reaktionsgefässen abnehmbar befestigt sind. Ist eine erhöhte Temperatur gefordert, so wird der untere Teil der Reaktionsgefässe geheizt. Die möglicherweise entstehenden Dämpfe können durch ein Kühlsystem, welches nur die Aussenflächen der entsprechenden Reaktionsgefässe kühlt (Zonenkühlung), kondensiert werden, wobei eine individuelle Kühlung einzelner Reaktionsgefässe nicht möglich ist. Als Abschluss der Reaktionsgefässe gegen aussen hin dient eine Septenplatte.

Von der Firma Aldrich, Schweiz, wird unter der Bezeichnung Cold-Finger Condenser eine Vorrichtung zur Temperierung von Gasen, Flüssigkeiten und/oder Feststoffen in einem Reaktionsgefäss vertrieben, die einen Hohlkörper und ein von oben her in den Hohlkörper führendes, teilweise innerhalb des Hohlkörpers verlaufendes Temperierrohr umfasst, das dazu bestimmt ist, von Temperiermedium durchflossen zu werden. Der Hohlkörper ist bis auf die Durchlässe für das Temperierrohr geschlossen. Mit dieser Temperiervorrichtung kann innerhalb des Reaktionsgefässes auch unterhalb des Verbindungsbereichs von Temperiervorrichtung und Reaktionsgefäss eine Temperierung von Gasen, Flüssigkeiten und/oder Feststoffen vorgenommen werden.

Diese Vorrichtung weist aber den Nachteil auf, dass mittels hohler Nadel, Greifer oder Löffel kein Zugriff durch die Vorrichtung hindurch in das Reaktionsgefäss möglich ist. Es können durch die Vorrichtung hindurch weder Gas, Flüssigkeit noch Feststoffe dem Reaktionsgefäss zugeführt oder aus diesem entnommen werden. Zudem beansprucht eine Serieschaltung mehrerer solcher Vorrichtungen aufgrund der Anordnung der Temperierrohre relativ viel Platz.

Angesichts der Nachteile der bisher bekannten, oben beschriebenen Vorrichtungen liegt der Erfindung die folgende Aufgabe zugrunde. Zu schaffen ist eine Vorrichtung der eingangs erwähnten Art zur Temperierung von Gasen, Flüssigkeiten und/oder Feststoffen in einem Reaktionsgefäss, bei der die Zugabe oder Entnahme von Gasen, Flüssigkeiten oder Feststoffen in das bzw. aus dem Reaktionsgefäss durch die Vorrichtung hindurch möglich ist.

Diese Aufgabe wird durch die erfindungsgemässe Vorrichtung gelöst, wie sie im unabhängigen Patentanspruch 1 definiert ist. Eine erfindungsgemässe Temperiereinrichtung mit einer Mehrzahl von Temperiervorrichtungen und eine erfindungsgemässe Verwendung einer Temperiervorrichtung sind in den unabhängigen Patentansprüchen 8 und 9 definiert. Bevorzugte Ausführungsvarianten ergeben sich aus den abhängigen Patentansprüchen.

Das Wesen der Erfindung besteht darin, dass bei einer Vorrichtung zur Temperierung von Gasen, Flüssigkeiten und/oder Feststoffen in einem Reaktionsgefäss, die einen hohlkörper und ein teilweise innerhalb des Hohlkörpers verlaufendes Temperierrohr, das dazu bestimmt ist, von Temperiermedium durchflossen zu werden, umfasst, der Hohlkörper oben und unten offen ist und das Temperierrohr so angeordnet ist, dass es den Öffnungsquerschnitt des Hohlkörpers an keiner Stelle voll ausfüllt.

Bei der erfindungsgemässen Vorrichtung ist die Zugabe oder Entnahme von Gasen, Flüssigkeiten oder Feststoffen in das bzw. aus dem Reaktionsgefäss durch die Vorrichtung hindurch möglich. D.h., dass während der Zugabe oder Entnahme von Gasen, Flüssigkeiten oder Feststoffen gleichzeitig gekühlt oder geheizt werden kann, was für gewisse Anwendungen vorteilhaft ist. Insbesondere kann gleichzeitig unter Rückflusskühlung mit der erfindungsgemässen Vorrichtung, z.B. mit einem Zuführwerkzeug und/oder über einen Gaskanal, dem Reaktionsgefäss eine Flüssigkeit zugeführt, ein Schutzgas, gasförmiger Reaktand, gasförmiger Katalysator oder ein Feststoff zugegeben und/oder ein Druckausgleich erreicht werden. Alle diese Eingriffe in das Reaktionsgefäss erfolgen durch die selbe Öffnung.

Die erfindungsgemässe Vorrichtung zur Temperierung von Gasen, Flüssigkeiten und/oder Feststoffen in einem Reaktionsgefäss sowie eine erfindungsgemässe Temperiereinrichtung mit einer Mehrzahl solcher Temperiervorrichnungen und eine erfindungsgemässe Verwendung einer solchen Temperiervorrichtung werden nachfolgend unter Bezugnahme auf die beigefügten Zeichnungen anhand von Ausführungsbeispielen detaillierter beschrieben. Es zeigen:

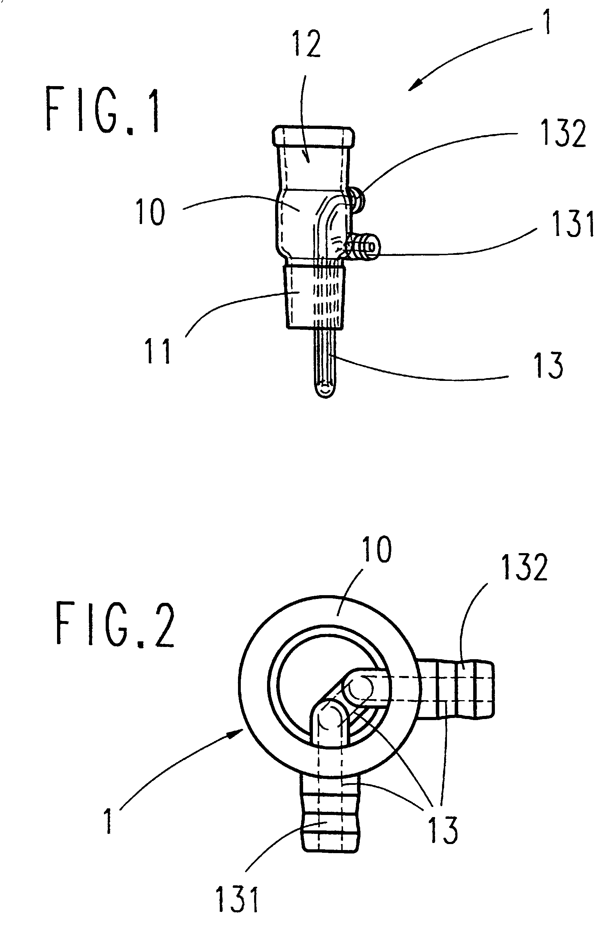

- Fig. 1: eine Seitenansicht eines Ausführungsbeispiels einer erfindungsgemässen Vorrichtung;
- Fig. 2: eine Ansicht von oben der Vorrichtung von Fig. 1;
- Fig. 3: eine an einer flexiblen Kupplung befestigte erfindungsgemässe Vorrichtung an zwei mit einem Rohr verbundenen Reaktionsgefässan, wobei eines eine Fritte aufweist;
- Fig. 4: einen einfachen Block mit einer auf der Oberseite befestigten Septenplatte und zwei Ausführungsbeispielen von flexiblen Kupplungen;

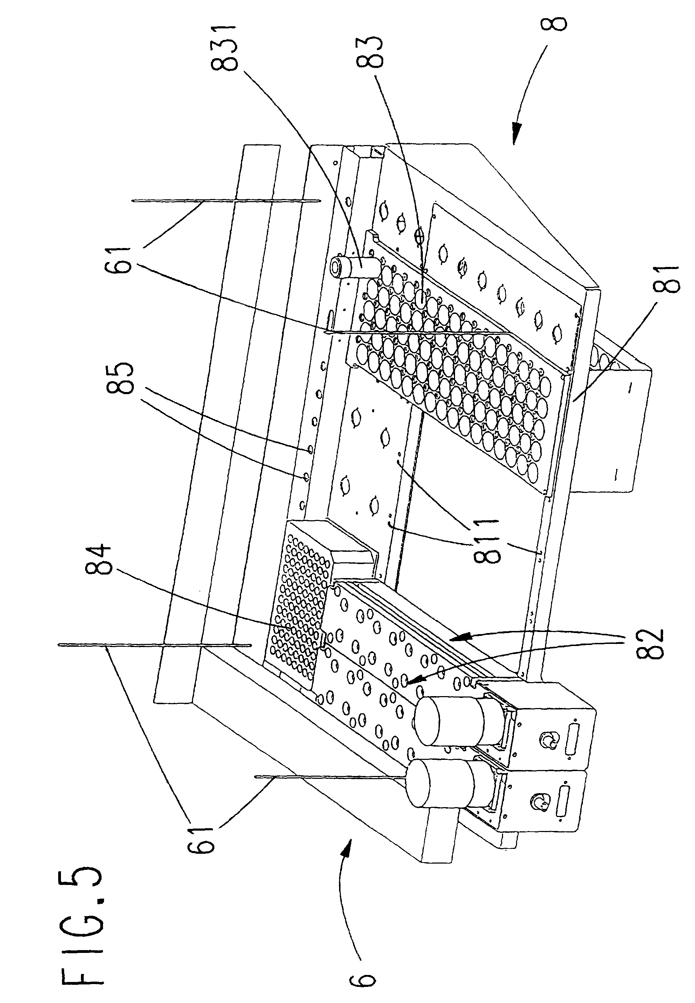

- Fig. 5: eine Perspektivansicht von schräg oben eines Ausführungsbeispiels einer Vorrichtung zur parallelen Durchführung einer Vielzahl von chemischen, biochemischen, biologischen oder physikalischen Verfahren;
- Fig. 6: eine Seitenansicht einer flexiblen Kupplung;
- Fig. 7: einen Schnitt durch die Kupplung von Fig. 5 entlang der Linie A-A;
- Fig. 8: eine schematische Ansicht von vorne einer Laboreinrichtung mit einem einfachen Block, flexiblen Kupplungen, erfindungsgemässen Temperiervorrichtungen, Reaktionsgefässen und einer Schüttelvorrichtung;
- Fig. 9: eine platzsparende Anordnung von miteinander seriell verbundenen erfindungsgemässen Vorrichtungen;
- Fig. 10: ein Reaktionsgefäss mit Integrierter Temperierkammer;
- Fig. 11: eine Teilansicht des Reaktionsgefässes von Fig. 10 und
- Fig. 12-14: Schnitte durch das Reaktionsgefäss von Fig. 11 entlang den Linien B-B, C-C bzw. D-D;

### Figur 1 und 2

Die dargestellte erfindungsgemässe Vorrichtung 1 zur Temperierung von Gasen, Flüssigkeiten und/oder Feststoffen in einem Reaktionsgefäss umfasst einen Hohlkörper 10 und ein teilweise innerhalb des Hohlkörpers 10 verlaufendes Temperierrohr 13, das dazu bestimmt ist, von Temperiermedium durchflossen zu werden.

Der Hohlkörper 10 ist rohrartig ausgebildet und oben und unten offen. Er weist in seinem oberen Bereich auf der Innenseite eine Normschlifffläche 12 zur lösbaren Befestigung der Vorrichtung 1 am Normschliff einer Laboreinrichtung oder einer Kupplung für eine Laboreinrichtung und in seinem unteren Bereich auf der Aussenseite eine Normschlifffläche 11 zur lösbaren Verbindung der Vorrichtung 1 mit einem Reaktionsgefäss auf. Anstelle von Normschliffverbindungen sind auch Gewindeverbindungen oder andere Befestigungsarten denkbar.

Das Temperierrohr 13 erstreckt sich von ausserhalb des Hohlkörpers 10 seitlich in ihn hinein, nach unten aus ihm heraus, wieder nach oben in ihn hinein und wieder seitlich aus ihm heraus. Dank dieser Anordnung kann in einem angebrachten Reaktionsgefäss unterhalb des Verbindungsbereichs von Reaktionsgefäss und Temperiervorrichtung 1 gekühlt werden. Damit kann beispielsweise erreicht werden, dass eine Gasphase relativ weit unten im Reaktionsgefäss kondensiert, das Kondensat vor der Normschliffverbindung abgefangen wird und somit im Reaktionsgefäss verbleibt.

Das Temperierrohr 13 ist im Öffnungsquerschnitt des Hohlkörpers 10 asymmetrisch angeordnet, d.h. gegenüber der Mitte nach aussen hin seitlich versetzt, um Platz für die Einführung eines Zugabe- und/oder Entnahmewerkzeugs, z.B. einer hohlen Nadel, eines Greifers oder eines Löffels, und/oder die direkte Zugabe z.B. eines Schutzgases, gasförmigen Reaktanden, gasförmigen Katalysators oder eines Feststoffes in das angebrachte Reaktionsgefäss zu schaffen.

Die Zu- und Wegführung des Temperiermediums, z.B. Wasser, erfolgt vorteilhafterweise mittels flexibler Zu- und Wegführleitungen, die an Anschlussoliven 131, 132 am Temperierrohr 13 anschliessbar sind. Die Anschlussoliven 131, 132 sind derart angeordnet, dass eine möglichst platzsparende Anordnung mehrerer erfindungsgemässer Vorrichtungen 1 möglich ist. Im vorliegenden Fall ist die Anschlussolive 132 höher angeordnet als die Anschlussolive 131. Die Zu- und Wegführleitungen können zur Verbindung des Temperierrohrs 13 mit einer Temperiereinheit, z.B. einem Kryostat, dienen, die Temperiermedium bereitstellt. Bei der Verwendung mehrerer erfindungsgemässer Vorrichtungen 1 besteht die Möglichkeit, diese raumsparend in Serie zu schalten und mit einer gemeinsamen Temperiereinheit zu verbinden oder für jede einzeln mit einer separaten Temperiereinheit eine individuell einstellbare Temperatur zu erreichen.

### Figur 3

Die erfindungsgemässe Vorrichtung 1 kann prinzipiell bei vielen verschiedenen Arten von Reaktionsgefässen verwendet werden. Vorteilhafterweise sollten diese über eine Verbindungsmöglichkeit, beim vorliegenden Ausführungsbeispiel einen Normschliff, zur Befestigung des Reaktionsgefässes an der erfindungsgemässen Vorrichtung 1 verfügen. Die Form und die aufnehmbaren Volumina der Reaktionsgefässe können abhängig vom verfügbaren Platz und der gewünschten Anzahl an nebeneinander eingesetzten Reaktionsgefässen in einem weiten Bereich variiert werden. So kommen z.B. zylinderförmige Reaktionsgefässe mit rundem oder flachem Boden, Rundkölbchen, Spitzkölbchen etc., insbesondere mit aufnehmbaren Volumina von 0,3 ml - 200 ml, in Betracht.

Hier dargestellt sind zwei mit einem flexiblen oder steifen Rohr 21 und einer Strebe 22 verbundene Reaktionsgefässe 2', 2", die zur Filtration verwendet werden können. Das eine Ende eines Filtrationsrohrs 23 ragt in den oberen Bereich des Reaktionsgefässes 2" hinein, während das andere Ende in eine Fritte 24, z.B. Glasfritte, im Bodenbereich des Reaktionsgefässes 2' eingeschmolzen ist. Durch Druckerzeugung im Reaktionsgefäss 2' und/oder Vakuumerzeugung im Reaktionsgefäss 2" kann durch die Fritte 24 hindurch eine Filtration vorgenommen werden und zwar so, dass sowohl der vor der Fritte 24 zurückbleibende Filterkuchen als auch das Filtrat dem Zugriff einer Zugabe- und/oder Entnahmevorrichtung zur Weiterverarbeitung zur Verfügung steht. Die Filtration kann unter gleichzeitigem und/oder vorgängigem Schütteln erfolgen.

Das Reaktionsgefäss 2' ist über eine Normschliffverbindung an einer erfindungsgemässen Temperiervorrichtung 1 angebracht, welche ihrerseits über eine weitere Normschliffverbindung an einer flexiblen Kupplung 3 befestigt ist.

### Figur 4

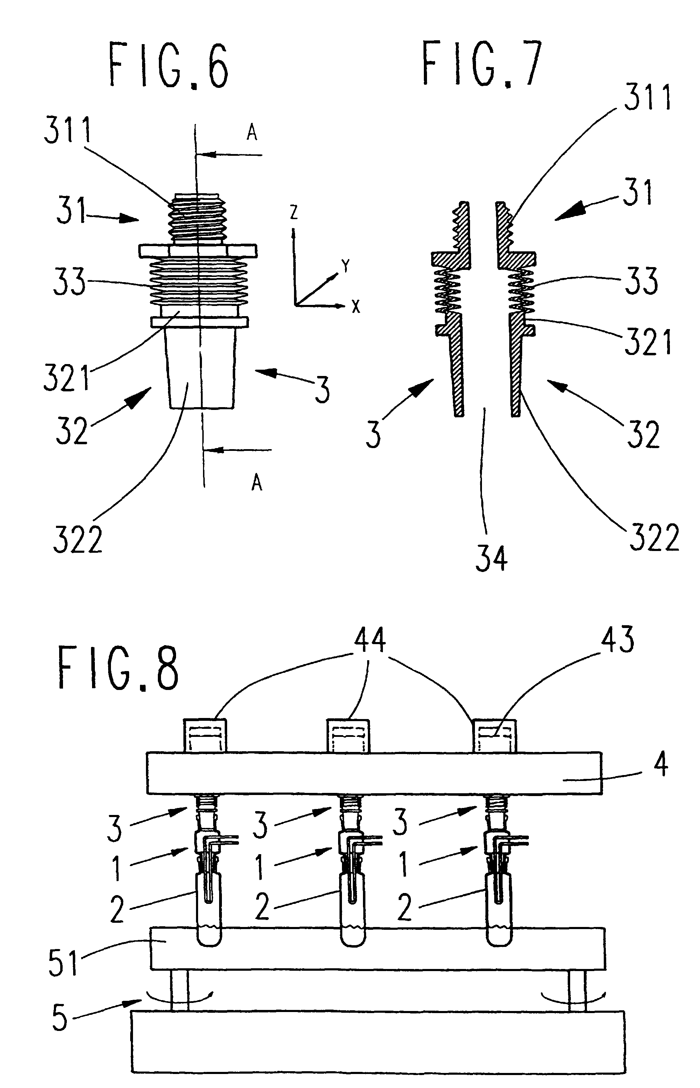

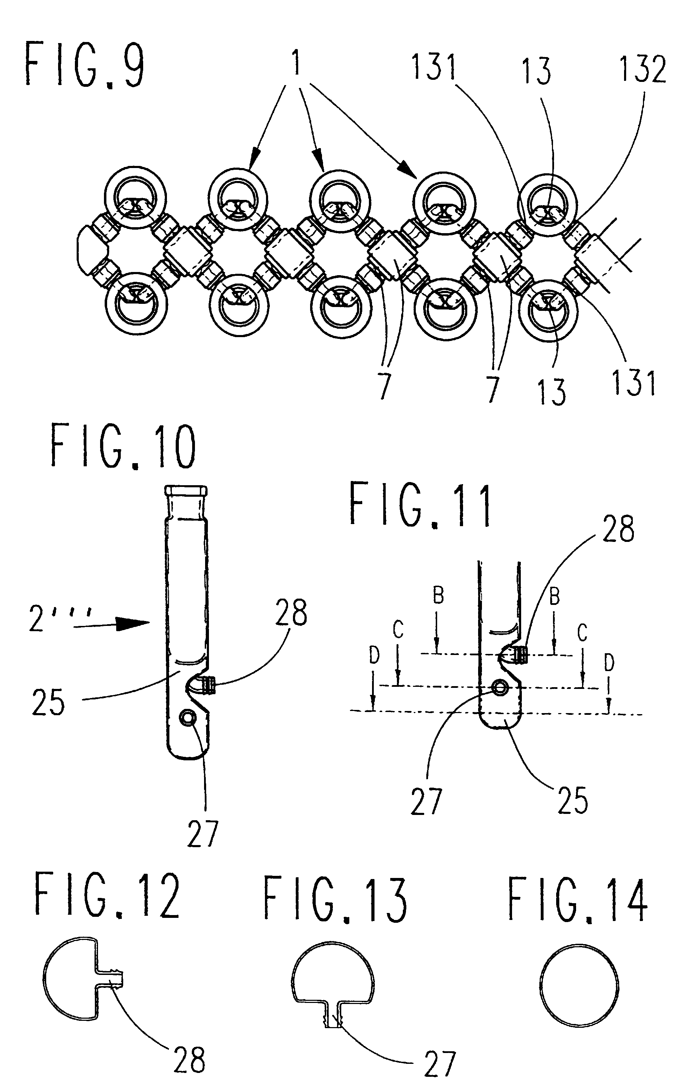

Erfindungsgemässe Temperiervorrichtungen können beispielsweise an an einem starren Block 4 einer Laboreinrichtung angebrachten flexiblen Kupplungen 3, 3' abnehmbar befestigt werden. Derartige flexible Kupplungen sind weiter unten im Zusammenhang mit den Fig. 6 und 7 näher erläutert.

Der dargestellte starre Block 4 weist eine Vielzahl von durchgehenden Löchern 41 auf, die durch eine auf der Oberseite des Blocks 4 befestigte Septenplatte 42 einseitig verschlossen sind. Je nach Bedarf wird auch auf eine Septenplatte 42 verzichtet. Jedem durchgehenden Loch 41 kann jeweils ein Reaktionsgefäss oder mehreren durchgehenden Löchern 41 ein gemeinsames Reaktionsgefäss zugeordnet werden.

### Figur 5

Erfindungsgemässe Temperiervorrichtungen können auch an Schaltblöcken 82 in einer Vorrichtung 8 zur parallelen Durchführung einer Vielzahl von chemischen, biochemischen, biologischen oder physikalischen Verfahren verwendet werden. Die hier dargestellte Vorrichtung 8 umfasst ein Trägergestell 81, in das zwei Schaltblöcke 82 eingesetzt sind, neben denen noch Platz für drei weitere Schaltblöcke ist. Die Befestigung der Schaltblöcke 8 erfolgt mittels Schrauben, wofür das Trägergestell 81 Schraubenlöcher 811 aufweist. Am Trägergestell 81 ist ausserdem ein Eduktgefässgestell 83 angeordnet, das zur Aufbewahrung von Eduktfläschchen 831 dient. Dieses ist derart ausgeführt, dass die Eduktfläschchen 831 auf zwei Ebenen angeordnet werden können. Dies dient der besseren Ausnutzung des zur Verfügung stehenden Platzes und somit der Erhöhung der Anzahl der aufnehmbaren Eduktfläschchen 831. Zum Halten von zusätzlichen Eduktfläschchen oder Probeentnahmefläschchen ist ein Halterungsblock bzw. eine Auffangplatte 84 vorgesehen. Lösungsmittelzapfstellen 85 ermöglichen eine Entnahme von Lösungsmitteln aus Lösungsmitteltanks.

Ein Arm 6 eines Samplers dient zum. Tragen einer hohlen Nadel 61 für das Handling von Ausgangsstoffen oder Produkten. Die Eckpunkte der Zugriffsfläche der hohlen Nadel 61 sind mit Nadeln 61 markiert.

Ebenfalls zur Vorrichtung 8 gehören, hier aber nicht dargestellt, eine Schütteleinrichtung, eine Vakuumpumpe, mehrere Gaszuführeinrichtungen, Ventile für die Gaszuführeinrichtungen bzw. die Vakuumpumpe, Temperiereinheiten, mehrere Steuereinheiten, ein Dilutor sowie eine Vielzahl von Reaktionsgefässen.

### Figuren 6 und 7

Die dargestellte flexible Kupplung 3 umfasst einen blockseitigen Teil 31 und einen reaktionsgefässseitigen Teil 32, zwischen denen ein Faltenbalg 33 angeordnet ist, welcher die Funktion erfüllt, dass der reaktionsgefässseitige Teil 32 gegenüber dem blockseitigen Teil 31 beweglich ist, und zwar sowohl lateral als auch in x-, y- und z-Richtung. Das gezeichnete x-, y- und z-Koordinatensystem dient der Verdeutlichung der möglichen Bewegungsrichtungen. Der blockseitige Teil 31 ist mit einem Gewinde 311 versehen, so dass die Kupplung 3 in ein mit einem Innengewinde versehenes Loch eines starren Blockes 4 oder Schaltblockes 82 geschraubt werden kann. Der reaktionsgefässseitige Teil 32 umfasst einen Fixierbereich 321 für das Anbringen von Befestigungsklammern und einen Normschliff 322 zur lösbaren Befestigung z.B. einer erfindungsgemässen Temperiervorrichtung 1, eines Reaktionsgefässes oder eines anderen Teils. Die flexible Kupplung 3 weist ausserdem eine zentrale Öffnung 34 auf.

Die Kupplung kann beispielsweise aus Kunststoff oder einem Metall, insbesondere aus Teflon, Polypropylen, Polyethylen oder Stahlblech bestehen.

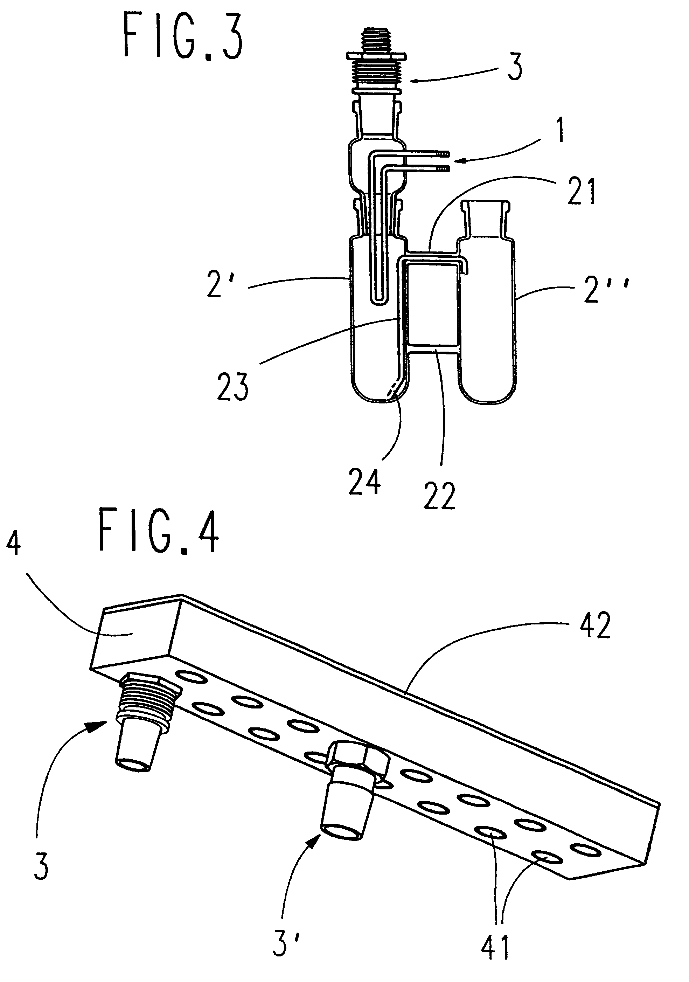

Als Alternative zum Faltenbalg 33 kann z.B. ein flexibles Rohr verwendet werden, siehe flexible Kupplung 3' in Fig. 4. Denkbar ist aber auch ein Kugelgelenk oder ein zwei- oder mehrachsiges Gelenk.

### Figur 8

An einem starren Block 4 sind hier über flexible Kupplungen 3 drei erfindungsgemässe Temperiervorrichtungen 1 angebracht, an denen wiederum drei Reaktionsgefässe 2 befestigt sind. Die Reaktionsgefässe 2 sind am Block 4 mit je einem Septum 43, das jeweils durch ein Schraubenhütchen 44 aus Kunststoff fixiert ist, fest verschlossen.

Die flexiblen Kupplungen 3 erlauben ein Schütteln der Reaktionsgefässe 2 mit hoher Frequenz. Zu diesem Zweck werden die Reaktionsgefässe 2 durch einen Mitnehmer 51 einer Schütteleinrichtung 5 geführt, wobei die Schüttelbewegung in Pfeilrichtung erfolgt. Dabei werden die Reaktionsgefässe 2 zusammen mit den Temperiervorrichtungen 1 geschüttelt, ohne dass sich die Schüttelbewegung auf den starren Block 4 überträgt. Durch die zusätzliche axiale Flexibilität der flexiblen Kupplungen 3 können sogar zwei starr miteinander verbundene Reaktionsgefässe geschüttelt werden.

Ausserdem liegt nicht das ganze Gewicht der Reaktionsgefässe 2 inkl. Inhalt auf der Schütteleinrichtung 5 auf, so dass relativ schwache Schütteleinrichtungen 5 ausreichen, die verhältnismässig geringe Vibrationen erzeugen, was den Einsatz von vibrationsempfindlichen Peripheriegeräten, wie z.B. Sampler, Roboter oder andere Automationseinrichtungen zur Zuführung und/oder Entnahme von Gasen und/oder Flüssigkeiten und/oder Feststoffen überhaupt erst ermöglicht.

Ein wesentlicher und entscheidender Vorteil der erfindungsgemässen Temperiervorrichtung 1 liegt darin, dass auch während des Schüttelns problemlos mit einem Zuführ- und/oder Entnahmewerkzeug, wie z.B. hohle Nadel 61, Greifer oder Löffel, eine Flüssigkeit, ein Gas oder ein Feststoff einem Reaktionsgefäss 2 durch den starren Block 4, die flexible Kupplung 3 und die Temperiervorrichtung 1 hindurch zugegeben und/oder entnommen werden kann, was bei den bisher bekannten Vorrichtungen nicht oder nur sehr beschränkt der Fall ist. Dies wird dadurch ermöglicht, dass das Temperierrohr 13 gegenüber der Mitte nach aussen hin seitlich versetzt im Hohlkörper 10 angeordnet ist und somit relativ viel Platz für die Zugabe und/oder Entnahme einer Flüssigkeit, eines Gases oder auch eines Feststoffs zur Verfügung steht.

### Figur 9

Mehrere erfindungsgemässe Temperiervorrichtungen 1 sind hier in einer besonders platzsparenden Anordnung in Serie geschaltet, wobei jeweils der Eingang einer Temperiervorrichtung 1 mit dem Ausgang einer gegenüberliegenden oder einer diagonal benachbarten Temperiervorrichtung 1 oder mit einer nicht dargestellten Temperiereinheit verbunden ist. Die Verbindung der einzelnen Temperiervorrichtungen 1 respektive ihrer Temperierrohre 13 untereinander bzw. mit der Temperiereinheit erfolgt durch flexible Zu- bzw. Wegführleitungen 7, die an den Anschlussoliven 131, 132 angeschlossen sind. Die Anschlussolive 132 ist jeweils höher angeordnet als die Anschlussolive 131, so dass jeweils zwei sich kreuzende Zu- bzw. Wegführleitungen 7 in verschiedenen Höhen verlaufen, was eine platzsparende Anordnung der Temperiervorrichtungen 1 erlaubt. Die schlaufenartige Verbindungsweise ermöglicht den Einsatz einer einzigen gemeinsamen Temperiereinheit für mehrere Temperiervorrichtungen 1.

### Figuren 10 bis 14

Erfindungsgemässe Temperiervorrichtungen 1 können auch zusammen mit Reaktionsgefässen 2"' verwendet werden, in die bereits eine Temperierkammer 25 integriert ist. Im vorliegenden Fall ist die Temperierkammer 25 unten an den Reaktionsgefässkörper 26 angeschmolzen. Die Temperierkammer 25 weist Anschlüsse 27 und 28 für Zu- bzw. Wegführleitungen auf und ist als Kühl- oder Heizkammer einsetzbar. Mehrere Temperierkammern 25 können analog zu den Temperiervorrichtungen 1 in Fig. 9 in platzsparender Weise miteinander verbunden werden.

Auch die im Zusammenhang mit Fig. 3 beschriebenen Reaktionsgefässe 2', 2" können mit zusätzlichen Temperierkammern 25 versehen werden. Grundsätzlich sind verschiedenartigste Kombinationen der vorgängig beschriebenen Elemente mit allen möglichen Reaktionsgefässerten denkbar.

## Patentansprüche

1. Vorrichtung (1) zur Temperierung von Gasen, Flüssigkeiten und/oder Feststoffen in einem Reaktionsgefäss (2; 2'; 2"; 2'"), mit einem Hohlkörper (10) und einem teilweise innerhalb des Hohlkörpers (10) verlaufenden Temperierrohr (13), das dazu bestimmt ist, von Temperiermedium durchflossen zu werden, dadurch gekennzeichnet, dass der Hohlkörper (10) oben und unten offen ist und das Temperierrohr (13) so angeordnet ist, dass es den Öffnungsquerschnitt des Hohlkörpers (10) an keiner Stelle voll ausfüllt.

2. Vorrichtung (1) nach Anspruch 1, dadurch gekennzeichnet, dass der Hohlkörper (10) rohrartig ausgebildet und das Temperierrohr (13) so angeordnet ist, dass neben dem Temperierrohr (13) eine hohle Nadel (61) durch den Hohlkörper (10) durchführbar ist.

3. Vorrichtung (1) nach Anspruch 2, dadurch gekennzeichnet, dass das Temperierrohr (13) innerhalb des rohrartigen Hohlkörpers (10) seitlich versetzt, insbesondere nur in der einen Hohlkörperlängshälfte, angeordnet ist.

4. Vorrichtung (1) nach einem der Ansprüche 1 bis 3, dadurch gekennzeichnet, dass der Hohlkörper (10) ein Mittel zur lösbaren Verbindung der Vorrichtung (1) mit einem Reaktionsgefäss (2; 2'; 2"; 2"') aufweist, insbesondere eine Normschlifffläche (11).

5. Vorrichtung (1) nach einem der Ansprüche 1 bis 4, dadurch gekennzeichnet, dass der Hohlkörper (10) ein Mittel zur lösbaren Befestigung der Vorrichtung (1) an einer Laboreinrichtung, z.B. einer Vorrichtung zur parallelen Durchführung einer Vielzahl von chemischen, biochemischen, biologischen oder physikalischen Verfahren, oder einer Kupplung (3; 3') für eine Laboreinrichtung aufweist, insbesondere eine Normschlifffläche (12).

6. Vorrichtung (1) nach einem der Ansprüche 1 bis 5, dadurch gekennzeichnet, dass das Temperierrohr (13) sich von ausserhalb des Hohlkörpers (10) seitlich in den Hohlkörper (10) hinein, nach unten aus dem Hohlkörper (10) heraus, wieder nach oben in den Hohlkörper (10) hinein und wieder seitlich aus dem Hohlkörper (10) heraus erstreckt.

7. Vorrichtung (1) nach Anspruch 6, dadurch gekennzeichnet, dass der seitliche Eintritt und der seitliche Austritt des Temperierrohrs (13) in den bzw. aus dem Hohlkörper (10) höhenverschoben sind.

8. Temperiereinrichtung mit einer Mehrzahl von Temperiervorrichtungen (1) nach einem der Ansprüche 1 bis 7, wobei die Temperiervorrichtungen (1) mittels Leitungen (7) miteinander in Serie verbunden sind und von einer gemeinsamen Temperiereinheit mit Temperiermedium versorgt werden.

9. Verwendung einer Temperiervorrichtung (1) nach einem der Ansprüche 1 bis 7 zur Temperierung von Gasen, Flüssigkeiten und/oder Feststoffen in einem Reaktionsgefäss (2; 2'; 2''; 2"') an einer Laboreinrichtung, z.B. einer Vorrichtung zur parallelen Durchführung einer Vielzahl von chemischen, biochemischen, biologischen oder physikalischen Verfahren.

10. Verwendung nach Anspruch 9, dadurch gekennzeichnet, dass die Temperiervorrichtung (1) über eine flexible Kupplung (3; 3') an der Laboreinrichtung befestigt ist.

## Claims

1. Apparatus (1) for heating/cooling gases, liquids and/or solids in a reaction vessel (2; 2'; 2"; 2'''), having a hollow body (10) and a heating/cooling tube (13) which partly runs within the hollow body (10) and through which heating/cooling medium is to flow, characterized in that the hollow body (10) is open at the top and bottom and the heating/cooling tube (13) is disposed in such a manner that it at no point completely fills the orifice cross-section of the hollow body (10).

2. Apparatus (1) according to Claim 1, characterized in that the hollow body (10) is designed in the form of a tube and the heating/cooling tube (13) is disposed in such a manner that, in addition to the heating/cooling tube (13), a hollow needle (61) can be passed through the hollow body (10).

3. Apparatus (1) according to Claim 2, characterized in that the heating/cooling tube (13) is laterally displaced within the tube-like hollow body (10), in particular is disposed only in one hollow body longitudinal half.

4. Apparatus (1) according to one of Claims 1 to 3, characterized in that the hollow body (10) has means for detachably connecting the apparatus (1) to a reaction vessel (2; 2'; 2"; 2'''), in particular a standard ground joint surface (11).

5. Apparatus (1) according to one of Claims 1 to 4, characterized in that the hollow body (10) has means for detachably attaching the apparatus (1) to a laboratory system, e.g. an apparatus for carrying out in parallel a multiplicity of chemical, biochemical, biological or physical processes, or a coupling (3;3') for a laboratory system, in particular a standard ground joint surface (12).

6. Apparatus (1) according to one of Claims 1 to 5, characterized in that the heating/cooling tube (13) extends from outside the hollow body (10) laterally into the hollow body (10), out of the bottom of the hollow body (10), up again into the hollow body (10) and again laterally out of the hollow body (10).

7. Apparatus (1) according to Claim 6, characterized in that the lateral entry and the lateral exit of the heating/cooling tube (13) into and out of the hollow body (10), respectively, are offset in height.

8. Heating/cooling system having a multiplicity of heating/cooling apparatuses (1) according to one of Claims 1 to 7, the heating/cooling apparatuses (1) being connected together in series by lines (7) and being supplied with heating/cooling medium from a shared heating/cooling unit.

9. Use of a heating/cooling apparatus (1) according to one of Claims 1 to 7 for heating/cooling gases, liquids and/or solids in a reaction vessel (2; 2'; 2"; 2''') on a laboratory system, for example an apparatus for carrying out in parallel a multiplicity of chemical, biochemical, biological or physical processes.

10. Use according to Claim 9, characterized in that the heating/cooling apparatus (1) is fastened to the laboratory system by a flexible coupling (3; 3').

## Revendications

1. Dispositif (1) pour chauffer/refroidir de gaz, de liquides et/ou de solides dans un récipient de réaction (2, 2', 2'', 2'''), comprenant un corps creux (10) et un tube de chauffage/refroidissage (13) qui s'étend en partie à l'intérieur du corps creux (10) et qui est conçu pour être parcouru par le fluide de chauffage/refroidissage, caractérisé par le fait que le corps creux (10) est ouvert en haut et en bas et que le tube de chauffage/refroidissage (13) est disposé de telle manière qu'il ne remplit complètement la section ouverte du corps creux (10) en aucun endroit.

2. Dispositif (1) selon la revendication 1, caractérisé par le fait que le corps creux (10) est réalisé en forme de tube et que le tube de chauffage/refroidissage (13) est disposé de telle manière qu'une aiguille creuse (61) puisse être passée à côté du tube de chauffage/refroidissage (13) à travers le corps creux (10).

3. Dispositif (1) selon la revendication 2, caractérisé par le fait que le tube de chauffage/refroidissage (13) est décalé latéralement à l'intérieur du corps creux tubulaire (10), plus particulièrement est arrangé seulement dans une moitié longitudinale du corps creux.

4. Dispositif (1) selon l'une des revendications 1 à 3, caractérisé par le fait que le corps creux (10) présente un moyen pour attacher de manière amovible le dispositif (1) à un récipient de réaction (2, 2', 2", 2'''), plus particulièrement une surface polie normalisée (11).

5. Dispositif (1) selon l'une des revendications 1 à 4, caractérisé par le fait que le corps creux (10) présente un moyen pour attacher de manière amovible le dispositif (1) à un équipement de laboratoire, par exemple un dispositif pour réaliser en parallèle une pluralité d'opérations chimiques, biochimiques, biologiques ou physiques, ou un coupleur (3, 3') pour un équipement de laboratoire, plus particulièrement une surface polie normalisée (12).

6. Dispositif (1) selon l'une des revendications 1 à 5, caractérisé par le fait que le tube de chauffage/refroidissage (13) s'étend de l'extérieur du corps creux (10) sur le côté vers l'intérieur du corps creux (10), vers le bas hors du corps creux (10), à nouveau vers le haut vers l'intérieur du corps creux (10) et à nouveau sur le côté hors du corps creux (10).

7. Dispositif (1) selon la revendication 6, caractérisé par le fait que l'entrée latérale et la sortie latérale du tube de chauffage/refroidissage (13) vers le ou hors du corps creux (10) sont décalées en hauteur.

8. Équipement de chauffage/refroidissage comprenant une pluralité de dispositifs de chauffage/refroidissage (1) selon l'une des revendications 1 à 7, les dispositifs de chauffage/refroidissage (1) étant reliés entre eux en série par le biais de conduites (7) et alimentés en fluide de chauffage/refroidissage par une unité de chauffage/refroidissage commune.

9. Utilisation d'un dispositif de chauffage/refroidissage (1) selon l'une des revendications 1 à 7 pour chauffer/refroidir de gaz, de liquides et/ou de solides dans un récipient de réaction (2, 2', 2'', 2''') sur un équipement de laboratoire, par exemple un dispositif pour réaliser en parallèle une pluralité d'opérations chimiques, biochimiques, biologiques ou physiques.

10. Utilisation selon la revendication 9, caractérisée par le fait que le dispositif de chauffage/refroidissage (1) est fixé à l'équipement de laboratoire par le biais d'un coupleur souple (3, 3').
